# EUROPÄISCHE PATENTANMELDUNG

(11) **EP 2 254 020 A1**
(43) Veröffentlichungstag der Anmeldung: **24.11.2010**
(21) Anmeldenummer: 09160798.6
(22) Anmeldetag: 20.05.2009
(51) Int. Cl.: G06F 1/26

(54) **Verfahren zum Betreiben eines Steuerrechners**

(71) Anmelder: Siemens Aktiengesellschaft, 80333 München (DE)
(72) Erfinder: Bremer, Klaus, 76149, Karlsruhe (DE)

(57) **Zusammenfassung**

Die Erfindung betrifft ein Verfahren zum Betreiben eines Steuerrechners (1, 9, 12), der mit einer zu steuernden Anlage (5) verbunden ist, welche über einen ersten Schalter (6) an eine Versorgungsleitung (7) angeschlossen ist, wobei der Steuerrechner (1, 9, 12) mittels eines ausgeführten Steuerbefehls heruntergefahren wird und einen Ruhezustand einnimmt. Es werden Maßnahmen vorgeschlagen, wodurch ein unkoordiniertes Schalten des Steuerrechners (1, 9, 12) und der Anlage (5) weitgehend vermieden und die Betriebssicherheit erhöht wird.

## Beschreibung

### Beschreibung

### Verfahren zum Betreiben eines Steuerrechners

Die Erfindung betrifft ein Verfahren zum Betreiben eines Steuerrechners gemäß dem Oberbegriff des Anspruchs 1. Darüber hinaus betrifft die Erfindung eine Anordnung, welche zur Durchführung des Verfahrens geeignet ist.

Aus dem Siemens-Katalog ST PC, Ausgabe 11/2008, Kapitel 2 und 3 sind als Steuerrechner so genannte Industrie-PCs bekannt, die zur Lösung unterschiedlicher Automatisierungsaufgaben vorgesehen sind. Gewöhnlich ist ein derartiger Industrie-PC mit einer zu steuernden Anlage verbunden, wobei der Industrie-PC und die Anlage über eine Leitung an eine geeignete Stromversorgung angeschlossen sind. Der Industrie-PC wird in der an sich bekannten Art und Weise softwaregesteuert ausgeschaltet, indem zunächst mindestens eine Anweisung mittels einer Maus-Eingabe angewählt und aktiviert oder ein Steuerbefehl ausgeführt wird, wodurch der Industrie-PC selbsttätig herunterfährt. Während des Herunterfahrens beendet z. B. das Betriebssystem des Industrie-PCs laufende Programme, speichert noch zu speichernde Daten oder Benutzereinstellungen auf der Festplatte oder deaktiviert Gerätetreiber. Nach einem derartigen Herunterfahren bzw. "Shutdown" verbleibt der Industrie-PC in einer Ruhestellung oder je nach Vorgaben und Einstellungen eines Anwenders schaltet das Betriebssystem des PCs im Zusammenwirken mit entsprechenden Hardware-Mitteln automatisch die Stromversorgung bzw. das Netzteil des Industrie-PCs aus.

Es kann nun vorkommen, dass ein Bediener nicht nur die Anlage, sondern - z. B. aufgrund einer Unachtsamkeit - die Anlage zusammen mit dem Industrie-PC ausschaltet, indem er sowohl die Anlage als auch den Industrie-PC mittels eines Schalters von der Versorgungsleitung trennt. In diesem Fall ist der Industrie-PC manuell ausgeschaltet und kann nicht mehr ordnungsgemäß herunterfahren, wodurch beispielsweise Daten verloren gehen können oder eine Neuinstallation des Betriebssystems des PCs oder eines Anwenderprogramms nach einem erneuten Anschalten des PCs erforderlich sein kann. Um dies zu vermeiden, kann der PC mit einer so genannten "Unterbrechungsfreien Stromversorgung" (USV) versehen sein, welche nach dem Abschalten der Versorgungsspannung für die Dauer des Herunterfahrens die Versorgung des PCs aufrechterhält. Eine derartige "Unterbrechungsfreie Stromversorgung" erfordert eine regelmäßige Wartung, im Rahmen deren die Akkumulatoren gewöhnlich ausgewechselt werden müssen.

Der vorliegenden Erfindung liegt die Aufgabe zugrunde, ein Verfahren der eingangs genannten Art zu verbessern. Darüber hinaus ist eine Anordnung zu schaffen, welche zur Durchführung des Verfahrens geeignet ist.

Diese Aufgabe wird im Hinblick auf das Verfahren mit den im kennzeichnenden Teil des Anspruchs 1 angegebenen und im Hinblick auf die Anordnung mit den im kennzeichnenden Teil des Anspruchs 3 angegebenen Maßnahmen gelöst.

Vorteilhaft ist, dass ein unkoordiniertes Schalten des Steuerrechners und der Anlage weitgehend vermieden und die Betriebssicherheit erhöht wird. Darüber hinaus kann auf einen Einsatz einer "Unterbrechungsfreien Stromversorgung" verzichtet werden, wodurch der Projektierungsaufwand verringert wird.

In einer Ausgestaltung der Erfindung ist vorgesehen, dass der Steuerrechner automatisch wieder eingeschaltet wird, falls der erste Schalter geschlossen wird, und/oder dass während des Hochfahrens (des Bootens) des Steuerrechners der zweite, steuerbare Schalter geschlossen wird. Dadurch wird ein koordiniertes Wiedereinschalten des Steuerrechners und der Anlage ermöglicht.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

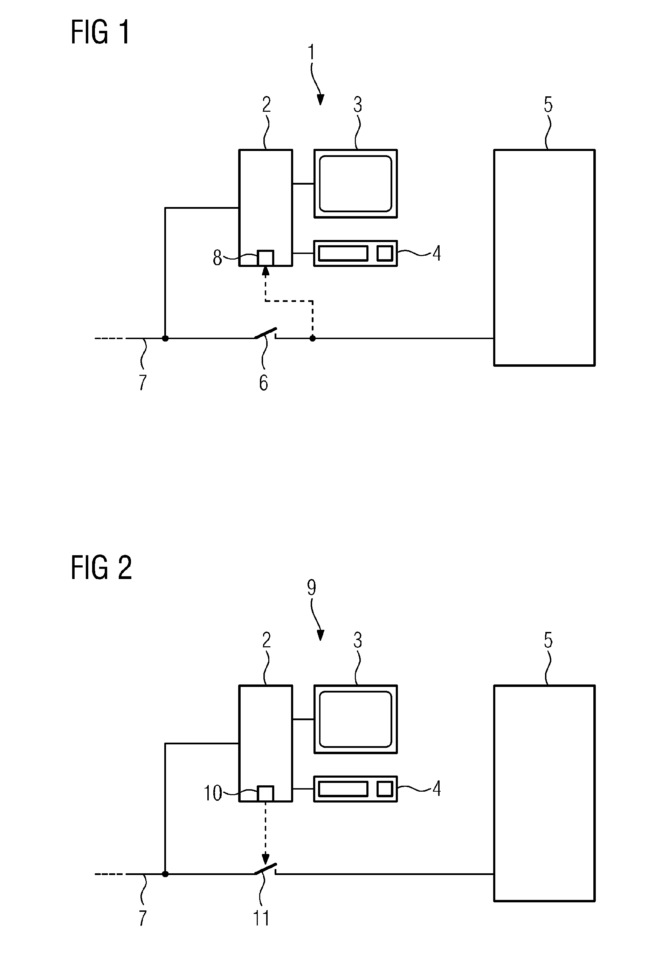

Figuren 1 bis 3 Anordnungen mit einem Steuerrechner und einer zu steuernden Anlage.

Die in den Figuren 1 bis 3 dargestellten gleichen Teile sind mit gleichen Bezugszeichen versehen.

In Figur 1 ist mit 1a ein Steuerrechner bezeichnet, welcher eine Systemeinheit 2, eine Anzeigeeinheit 3 und eine Eingabeeinheit 4 umfasst. Selbstverständlich können weitere Hardwaremittel, z. B. eine weitere Eingabeeinheit in Form einer so genannten Maus, an die Systemeinheit 2 angeschlossen sein. Die Systemeinheit 2 ist zur Aufnahme von Steckkarten in ein Motherboard bzw. eine Grundplatine der Systemeinheit 2 vorgesehen, beispielsweise Steckkarten in Form einer CPU-Steckkarte, einer Steckkarte zur Verwirklichung einer Ethernet- oder Feldbuskommunikation, einer Steckkarte für eine analoge und/oder digitale Ein- und/oder Ausgabe oder einer sonstigen für den Betrieb des Steuerrechners 1 geeigneten Steckkarte. Der Steuerrechner 1 ist zur Steuerung einer Anlage 5, z. B. einer Anlage in Form eines Automobilprüfstandes oder einer hydraulischen Presse, vorgesehen und ist über eine hier nicht dargestellte Steuer- und Kommunikationsverbindung mit dieser Anlage verbunden. Die zu steuernde Anlage 5 ist über einen ersten Schalter 6 und der Steuerrechner 1 direkt an eine Versorgungsleitung 7 angeschlossen, wobei eine Eingangsschaltung des Steuerrechners 1 über einen Eingang 8 erfasst, ob die Anlage 5 über die Versorgungsleitung 7 mit einer entsprechenden Spannung versorgt wird oder ob überhaupt an der Versorgungsleitung 7 eine Spannung anliegt. Es wird im Folgenden angenommen, dass ein Bediener die Anlage 5 abschaltet, indem der Bediener den ersten Schalter 6 öffnet und dadurch die Anlage 5 von der Versorgungsleitung 7 trennt. In diesem Fall wird der Anlage 5 keine Versorgungsspannung aufgeschaltet und der Steuerrechner 1 erfasst deshalb keine Spannung über seinen Eingang 8. Aufgrund dessen, dass der Steuerrechner 1 keine Spannung erfasst, übermittelt die Eingangsschaltung des Steuerrechners 1 dem Betriebssystem oder dem BIOS (= Basic Input Output System) des Steuerrechners einen Steuerbefehl zum Herunterfahren des Steuerrechners 1, was bewirkt, dass der Steuerrechner 1 in der an sich bekannten Art und Weise herunterfährt und in einer Ruhestellung verbleibt, wobei in dieser Ruhestellung die Eingangsschaltung weiterhin mit einer ausreichenden Spannung für die Überwachung der Versorgungsleitung 7 beaufschlagt ist. Dadurch, dass der Steuerrechner 1 aufgrund dessen heruntergefahren wird, dass die Anlage 5 von der Versorgungsleitung 7 getrennt wird, wird ein koordiniertes Schalten der Anlage 5 und des Steuerrechners 1 bewirkt.

Der Steuerrechner 1 wird wieder aktiviert und verlässt seine Ruhestellung, falls der Bediener den ersten Schalter 6 wieder schließt. Die Eingangsschaltung des Steuerrechners 1 erfasst über den Eingang 8 eine Spannung auf der Versorgungsleitung 7. Aufgrund dieser erfassten Spannung verlässt der Steuerrechner 1 seine Ruhestellung, indem die Eingangsschaltung des Steuerrechners 1 dem Betriebssystem oder dem BIOS einen Befehl zum Hochfahren (Booten) zuführt. Auch in diesem Fall wird ein koordiniertes Schalten der Anlage 5 und des Steuerrechners 1 bewirkt.

Um die Anlage 5 mittels eines Steuerrechners zu schalten, weist ein Steuerrechner 9 eine Ausgangsschaltung mit einem Ausgang 10 (Figur 2) auf, über den ein zweiter Schalter 11 angesteuert wird. Für den Fall, dass ein Bediener den Steuerrechner 9 herunterfahren lässt, steuert die Ausgangsschaltung des Steuerrechners 9 den zweiten Schalter 11 derart an, dass dieser geöffnet wird, wodurch die Anlage 5 von der Versorgungsleitung 7 getrennt und nicht mehr mit einer entsprechenden Versorgungsspannung beaufschlagt wird. Die Anlage 5 wird erst dann wieder mit dieser Versorgungsspannung beaufschlagt, falls der Bediener den Steuerrechner 9 wieder hochfahren lässt, wodurch die Ausgangsschaltung den zweiten Schalter 11 derart ansteuert, dass dieser Schalter 11 sich schließt.

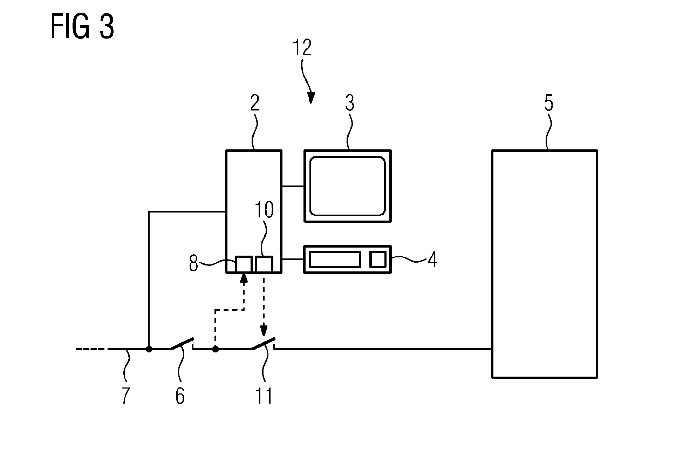

Figur 3 zeigt eine Ausführungsform einer Anordnung mit der Anlage 5 und mit einem Steuerrechner 12, welcher die mit dem Eingang 8 versehene Eingangsschaltung und die mit dem Ausgang 10 versehene Ausgangsschaltung aufweist. Die Anordnung weist ferner den ersten Schalter 6 und den zweiten, steuerbaren Schalter 11 auf, von denen der erste Schalter 6 und die mit dem Eingang 8 versehene Eingangsschaltung zur Verwirklichung der in Figur 1 beschriebenen und der zweite, steuerbare Schalter 11 und die mit dem Ausgang 10 versehene Ausgangsschaltung zur Verwirklichung der in Figur 2 beschriebenen Funktions- und Wirkungsweise vorgesehen sind.

## Patentansprüche

1. Verfahren zum Betreiben eines Steuerrechners (1, 9, 12), der mit einer zu steuernden Anlage (5) verbunden ist, welche über einen ersten Schalter (6) an eine Versorgungsleitung (7) angeschlossen ist, wobei der Steuerrechner (1, 9, 12) mittels eines ausgeführten Steuerbefehls heruntergefahren wird und einen Ruhezustand einnimmt, **dadurch gekennzeichnet, dass**
- der Steuerbefehl ausgeführt wird, falls der erste Schalter (6) zum Trennen von der Versorgungsleitung (7) geöffnet wird, und/oder
- während des Herunterfahrens des Steuerrechners (1, 9, 12) ein zweiter, durch den Steuerrechner (1, 9, 12) steuerbarer Schalter (11) zum Trennen der Anlage (5) von der Versorgungsleitung (7) geöffnet wird.

2. Verfahren nach Anspruch 1, **dadurch gekennzeichnet, dass**
- der Steuerrechner (1, 9, 12) automatisch wieder hochfährt, falls der erste Schalter (6) geschlossen wird, und/oder
- während eines Hochfahrens des Steuerrechners (1, 9, 12) der zweite, steuerbare Schalter (11) geschlossen wird.

3. Anordnung mit
- einem Steuerrechner (1, 9, 12), welcher mittels eines ausgeführten Steuerbefehls herunterfährt und einen Ruhezustand einnimmt,
- einer mit dem Steuerrechner (1, 9, 12) verbundenen, zu steuernden Anlage (5) und
- einer Versorgungsleitung (7) zum Anschließen der Anlage (5) über einen ersten Schalter (6),
**dadurch gekennzeichnet, dass** der Steuerrechner (1, 9, 12) dazu ausgebildet ist,
- den Steuerbefehl auszuführen, falls der Steuerrechner (1, 9, 12) erkennt, dass der erste Schalter (6) zum Trennen von der Versorgungsleitung (7) geöffnet ist, und/oder
- während des Herunterfahrens einen zweiten, steuerbaren Schalter (11) zum Trennen der Anlage (5) von der Versorgungsleitung (7) zu öffnen.

4. Anordnung nach Anspruch 3, **dadurch gekennzeichnet, dass** der Steuerrechner (1, 9, 12) ferner dazu ausgebildet ist,
- automatisch wieder hochzufahren, falls dieser erkennt, dass der erste Schalter (6) geschlossen wird, und/oder
- den zweiten, steuerbaren Schalter (11) während seines Hochfahrens zu schließen.

5. Anordnung nach Anspruch 3 oder 4, **dadurch gekennzeichnet, dass** der Steuerbefehl Bestandteil des Betriebssystems oder des BIOS des Steuerrechners (1, 9, 12) ist.
